# EUROPÄISCHE PATENTSCHRIFT

(11) **EP 1 507 426 B1**
(45) Veröffentlichungstag und Bekanntmachung des Hinweises auf die Patenterteilung: **20.01.2010**
(21) Anmeldenummer: 04010262.6
(22) Anmeldetag: 30.04.2004
(51) Int. Cl.: H04W 24/00

(54) **Verfahren zur Messung der Dienstgüte von Mobilfunknetzen**
Method for measuring the Quality of Service of mobile telecommunication networks
Procédé pour mesurer la qualité de service de réseaux mobiles de communication

(30) Priorität: 23.07.2003 DE 10333717
(43) Veröffentlichungstag der Anmeldung: 16.02.2005
(73) Patentinhaber: DB Systel GmbH, 60326 Frankfurt am Main (DE)
(72) Erfinder: Wendler, Bodo, 04178 Leipzig (DE)
(74) Vertreter: Zinken-Sommer, Rainer

(56) Entgegenhaltungen:
- EP-A- 0 920 228
- EP-A- 1 079 647
- WO-A-02/03736
- COCCOLI A ET AL: "ANALYSIS OF GROUP COMMUNICATION PROTOCOLS TO ASSESS QUALITY OF SERVICE PROPERTIES" PROCEEDINGS. IEEE INTERNATIONAL SYMPOSIUM ON HIGH ASSURANCE SYSTEMS ENGINEERING, 2000, Seiten 247-256, XP001172830

## Beschreibung

Die Erfindung betrifft ein Verfahren zur Messung mindestens eines die Qualität eines zwischen mindestens einem ersten mobil betriebenen Endgerät und mindestens einem stationär betriebenen Endgerät und/oder weiteren mobil betriebenen Endgeräten aufgebauten Mobilfunknetzes bzw. Ende-zu-Ende-Mobilfunkdienstes charakterisierenden Dienstgüte-Parameters gemäss den Merkmalen des Oberbegriffes des Anspruches 1.

Bei der Überprüfung und Abnahme von Mobilfunknetzen bzw. Ende-zu-Ende-Mobilfunkdiensten spielt die qualitative Beurteilung des Verbindungsaufbaus bzw. der bereits aufgebauten Mobilfunkverbindungen eine zentrale Rolle. Nach wie vor bereitet jedoch die Überprüfung und verbindliche Beurteilung dieser sogenannten Dienstgüte bzw. Quality of Service (QoS) grosse Schwierigkeiten. Dies ist insbesondere bei Mobilfunk-Systemen von Relevanz, bei denen sicherheitsrelevante Informationen von und zu bewegten Objekten übertragen werden sollen, wie es z.B. beim GSM-R-System der europäischen Eisenbahnen der Fall ist. Es existiert zwar eine Vielzahl von Definitionen möglicher Parameter, die zur Charakterisierung der Dienstgüte herangezogen werden können, jedoch ist oftmals die messtechnische Erfassung und nachfolgende Aus- und Bewertung dieser Parameter noch nicht gelöst.

Unter einem "mobil betriebenen Funknetzteil" wird im Rahmen dieser Anmeldung ein nicht-ortsfester Teil eines Mobilfunknetzes in Form eines Mobilfunkendgerätes verstanden. Unter einem "stationär betriebenen Funknetzteil" ist der ortsfeste Teil des Mobilfunknetzes in Form eines Festnetzendgerätes zu verstehen, wie beispielsweise ein ISDN-Endgerät oder ein ISDN-Terminal-Adapter (ISDN-TA). Die im nachfolgenden Text verwendete Abkürzung ASCI bezeichnet "Advanced Speech Call Items" und dient gemäss ETSI-Definition als Sammelbegriff für Gruppenrufe, Sammelrufe und Rufverdrängungsmechanismen.

Die EP 1 079 647 A1 offenbart ein Verfahren zur maschinengestützten Analyse und Beurteilung eines Mobilfunksystems, bei dem im Rahmen einer Testphase zwischen zwei Endgeräten eine Vielzahl von Verbindungen hergestellt und eine Mehrzahl von Protokollparametern erfasst und in Datenbanken mit geeigneter Struktur abgespeichert werden. Das dort offenbarte Verfahren geht jedoch nicht auf die spezifischen Erfordernisse zur Überprüfung der ASCI-Dienste ein und bietet somit hierfür auch keine Lösungsansätze.

Auch die Veröffentlichung "Analysis of Group Communication Protocols to Assess Quality of Service Properties" (A. Coccoli, S. Schemmer, F. di Giandomenico, M. Mock, A. Bondavalli; IEEE; 2000; Seiten 247 ff.) offenbart Hinweise für die Gestaltung von Protokollen und QoS-Parametern für Gruppenkommunikations-Anwendungen in kabellosen Netzen (wie z.B. W-LAN) sowie für die Modellierung dafür geeigneter Bewertungsverfahren. Allerdings kann der Fachmann auch hieraus keine Hinweise auf technische Realisierungsansätze zur Messung von Gruppenrufparametern entnehmen.

Ein weiteres derzeit bekanntes Verfahren ist in der Veröffentlichung "Messung und Auswertung der QoS-Parameter des Übertragungssystems für ETCS" (Göller, Lengemann; Signal und Draht (94) 1+2/2002) beschrieben. Dieses Verfahren basiert auf einem Messverfahren für die im Rahmen des ETCS-Projektes (European Train Control System) definierten Dienstgüteparameter, wobei das Messverfahren an sich funktional mit einer Mess-Software bzw. Messapplikation fest verknüpft ist. Hierzu werden mittels eines mobil und eines stationär betriebenen (Mobil- bzw. Festnetz-)Endgerätes jeweils die Ende-zu-Ende-Schnittstellen des Mobilfunknetzes (identisch mit den Schnittstellen von ETCS zum GSM-R) erfasst.

Dieses bekannte Verfahren ist technisch nur in der Lage, Signalisierungsinformationen und Nutzdaten für die Dienste der Datenübertragung, nicht jedoch Sprach- und ASCI-Dienste an den beiden mobilen und stationären Ende-Schnittstellen des Mobilfunknetzes zur Messdatenapplikation zu erfassen und sofort online auszuwerten. Das diesem Messsystem zugrundeliegenden Verfahren ist ferner lediglich für die Messung eines jeweils einzigen logisch fest implementierten und nicht erweiterbaren Dienstgüteparameters konzipiert. Dieser eine Dienstgüteparamter muss vor der Messung ausgewählt und konfiguriert werden und ist dann bis zum Erreichen eines vorher zu definierenden Messzieles zu messen, wobei die Messung temporär unterbrochen werden kann. Dies erfordert zwingend eine online-Auswertung; die Messung weiterer, nichtvorprogrammierter Dienstgüteparameter, insbesondere im Hinblick auf die Sprach- und ASCI-Dienste ist ausgeschlossen. Eine Erweiterung dieses Messsverfahrens hinsichtlich Anzahl oder Art des überprüften Dienstgüteparameters ist nicht möglich.

Andere bekannte Werkzeuge zur Messwert-Erfassung bei der Überprüfung der Dienstgüte von Mobilfunknetzen bzw. Ende-zu-Ende-Mobilfunkdiensten bedienen sich zwar verschiedener Festnetz- und Mobilfunkendgeräte und sind damit - zumindest teilweise - funktional auch in der Lage, an den Ende-Schnittstellen des Mobilfunknetzes und/oder der Luftschnittstelle Messdaten zu erfassen und/oder aufzuzeichnen. Jedoch ermöglichen die diesen bekannten Werkzeugen zugrundeliegenden Messverfahren und Messkonzepte hinsichtlich Steuerung, Erfassung und Auswertung nicht die logische Verknüpfung der Messgrössen für die ASCI-Funktionalität, welche die im Rahmen von GSM-R zwingend erforderlichen Gruppenruf- und Sammelrufdienste abbilden und damit für die Beurteilung eines GSM-R-Netzes von zwingender Notwendigkeit sind.

Ferner sind Verfahren für die Dienstgütemessung von Datendiensten gemäß der Anwendungen in öffentlichen Mobilfunknetzen (z.B. GPRS) bekannt. Es existieren also bekannte Verfahren zur Messung von Parametern wie beispielsweise Datendurchsatz, Round Trip Delays und PING-Zeiten, jedoch sind die hierfür zugrundliegenden Messverfahren technisch wiederum nicht in der Lage, die erforderlichen Messverfahren für die Erfassung der Messgrößen für die spezifischen ETCS-Dienstgüteparameter (wie z.B. Senden und Empfangen von Signalisierungsinformationen und transparenten Nutzdatenströmen über transparente Mobilfunkdatenkanäle (CSD), das messtechnische Ermitteln dieser Dienstgüteparameter aus den gesendeten und empfangen Messgrößen) abzubilden.

Dabei wird in der Praxis als besonders nachteilig empfunden, dass diese Systeme entweder nur die Messwerte für die Dienstgüteparameter spezieller Datenanwendungen (hier z.B. nur für die im Rahmen des European Train Control System (ETCS) definierten Parameter) oder nur die Messwerte für die Dienstgüteparameter allgemeiner Sprachdienste erfassen können, jedoch beispielsweise nicht die für die Beurteilung der im Rahmen von GSM-R zwingend erforderlichen Gruppenruf- und Sammelrufdienste erforderlichen Messgrössen. So fokussieren sich die aus den öffentlichen Mobilfunknetzen bekannten Systeme auf die Funkabdeckung oder die Netzkapazitätsdimensionierung definierter Parameter, wie beispielsweise Funknetzpegel, Gesprächsqualität oder Anruferfolgsrate).

Es fehlen somit geeignete Mess- und Auswerteverfahren zur Bereitstellung der bei ASCI-fähigen Mobilfunknetzen zu messenden Dienstgüteparameter (nicht zu verwechseln mit anschließender statistischer Auswertung).

Der Erfindung liegt die Aufgabe zugrunde, ein Verfahren zur Messung mindestens eines die Qualität eines zwischen mindestens einem mobil betriebenen Funknetzteil und mindestens einem stationär betriebenen Funknetzteil aufgebauten Mobilfunknetzes bzw. Ende-zu-Ende-Mobilfunkdienstes charakterisierenden Dienstgüte-Parameters zu entwickeln, das in umfassender Weise diese Dienstgüte-Parameter für die in einem GSM-R-Netz zu realisierenden Daten-, Sprach-, Gruppenruf- und / oder Sammelrufdienste unterstützt. Insbesondere ist die Gewährleistung von Synchronizität und Korrelation der auf den beiden Messsystemteilen (nämlich auf der mobilen ebenso wie auf der stationären Seite) zu erfassenden und aufzuzeichnenden parameter-abhängigen Messdaten sowie der zum Zweck der Messung zwischen den Funknetzteilen ausgetauschten Nutzdaten zu gewährleisten. Ebenso sind die in den gemessenen Daten enthaltenen Messfehler zu erkennen und die daraus resultierenden Verfälschungen bei der zu messenden Dienstgüte des GSM-R-Netzes zu eliminieren. Weiterhin ist insbesondere die Dienstgütemessung des Aufbaus von Gruppen- und/oder Sammelrufen an der Funkschnittstelle und/oder an der mobilen Endschnittstelle Rₘ des Mobilfunknetzes für das eineinhalb- (1,5-) oder mehrkanalige Gruppenruf- bzw. Sammelrufmodell zu realisieren. Die besondere Schwierigkeit, welche durch die vorliegende Erfindung gelöst werden soll, ist darin zu sehen, dass in diesem Fall der rufaufbauende Teilnehmer nicht über die den Gruppen- bzw. Sammelruf charakterisierenden Signalisierungsinformationen an der Funkschnittstelle und/oder an den mobilen Endschnittstelle Rₘ des Mobilfunknetzes verfügt.

Diese Aufgabe wird in Verbindung mit dem Oberbegriff des Patentanspruches 1 erfindungsgemäß dadurch gelöst dass mindestens ein weiteres mobiles Endgerät in den mobilen Messsystemteil integriert sowie als passiver Teilnehmer an einer Gruppen- oder Sammelrufverbindung zur Erfassung der zum Aufbau dieser Gruppen- oder Sammelrufverbindung notwendigen Signalisierungsinformationen eingesetzt wird, wobei die Verbindungsaufbauinformationen in diesem Messsystemteil mindestens von diesem weiteren mobilen Endgerät und dem ersten mobil betriebenen Mobilfunkendgerät korreliert, zusammengeführt und aufgezeichnet werden.
Der erfinderische Wert dieses Realisierungsansatzes offenbart sich insbesondere bei Mobilfunknetzen, die das eineinhalb- oder mehrkanalige Verbindungsmodell für Gruppen- bzw. Sammelrufe verwenden. In diesen Netzen kann der den Gruppenruf bzw. Sammelruf aufbauende mobile Mobilfunkteilnehmer mit den zur Messung des Gruppen- oder Sammelrufes verwendeten Mobilfunkendgeräten zuerst nur über eine Punkt-zu-Punkt-Verbindung am Gruppen-/Sammelruf teilnehmen und aufgrund deren technischer Eigenschaften die Signalisierungsinformationen des gemeinsamen Gruppen- oder Sammelrufkanals (über den die anderen Mobilfunkteilnehmer über den im Aufbau befindlichen Gruppenruf informiert werden und anschließend Nutzdaten empfangen) nicht erfassen bzw. auswerten. Nur durch die erfindungsgemäße Verwendung eines zweiten Mobilfunkendgerätes, das als passiver Gruppenruf- bzw. Sammelrufteilnehmer (im Status eines "Hörenden") die weiteren für die Messung des Dienstgüteparameters erforderlichen Signalisierungsinformationen aufnimmt, können im Zuge des implementierten Messverfahrens die aus beiden Mobilfunkendgeräten erfassten Signalisierungsinformationen extrahiert, korreliert und der messtechnischen Bestimmung des Dienstgüteparameters zugeführt werden.

Eine sinnvolle Ausgestaltung des erfindungsgemässen Verfahrens besteht darin, dass
- in der Phase für den qualitativ zu bewertenden Aufbau einer Verbindung sowohl den zum Zweck der Messung gesendeten Signalisierungsinformationen auf der Senderseite als auch den zum Zweck der Messung empfangenen Signalisierungsinformationen auf der Empfängerseite und
- zusätzlich in der Phase für die qualitativ zu bewertende Übertragung von Nutzdaten sowohl den zum Zweck der Messung gesendeten Nutzdaten auf der Senderseite als auch den zum Zweck der Messung empfangenen Nutzdaten auf der Empfängerseite
   durch die mobilen bzw. stationären Messsystemteille jeweils nach erfolgter messtechnischer Erfassung
- den Ort des Senders bzw. Empfängers charakterisierende Informationsdaten,
- den Zeitpunkt des Sende- bzw. Empfangsvorgangs charakterisierende Informationsdaten
- sowie die Synchronizität der Steuerabläufe des Messsystems und / oder die Kohärenz von einander zugehörigen gesendeten und empfangenen Nutzdatenströmen charakterisierende Informationsdaten aufgeprägt werden.

In der Praxis ist dies immer dann erforderlich, wenn die für mindestens einen Dienstgüteparameter erforderlichen Messdaten aufgrund der Zweiteilung in einen stationären sowie in einen mobilen Messsystemteil zur weiteren messtechnischen Bestimmung exakt zusammengeführt werden müssen. Somit können kausale Zusammenhänge beim Zustandekommen einzelner Messwerte besser nachvollzogen werden. Ebenso können gesendete und empfangene Nutzdaten messtechnisch verglichen werden, deren Verfälschung während der Übertragung im zu bewertenden Mobilfunknetz und die resultierende Korrelation gesendeter und empfangener Nutzdaten unbekannt ist. Daraus können dann weitere Dienstgüteparameter messtechnisch bestimmt werden.

Eine weitere vorteilhafte Ausprägung des erfinderischen Gedankens sieht vor, dass die den Nutzdaten zugehörigen Synchronisationsinformationen zusammen mit diesen Nutzdaten über den zur Nutzdatenübermittlung genutzten Kanal übertragen werden und dass die zur Messablaufsteuerung und / oder zum Abgleich der Zeitbasen dienenden Synchronisationsinformationen im Anschluss an die Nutzdatenübermittlung über den noch bestehenden Nutzdaten-Kanal oder über einen zusätzlichen und originären Synchronisationsdaten-Kanal übertragen werden.

Eine weitere vorteilhafte Ausprägung des erfindungsgemäßen Verfahrens besteht darin, dass die Nutzdaten und / oder Signalisierungsinformationen durch den die Messdaten erfassenden Messsystemteil mittels Vergleich der aufgeprägten Synchronisationsinformation auf Kohärenz sowie mittels Abgleich der erfassten Messwerte gegen erwartete Messwertbereiche mit konfigurierbaren Schwellwerten auf Plausibilität überprüft werden. Im Falle nicht feststellbarer Plausibilität werden negative Statusmeldungen generiert.
In der Praxis ist dies immer dann relevant, wenn derselbe zu messende Dienstgüteparameter in einer Vielzahl von sich wiederholenden Messzyklen mit automatisierten Messprozeduren und insbesondere ohne sofortige Online-Auswertung der örtlich verteilt vorliegenden Messwerte (und damit Vorlage der endgültigen konsolidierten Messwerte eines QoS-Parameters) erfasst werden soll.

Ferner ist es auch von Vorteil, wenn die Zustände der internen und peripheren Komponenten eines jeden Messsystemteils - insbesondere dessen internen Orts- und / oder Zeitgebers, dessen angeschlossener oder integrierter Endgeräte und dessen Messwertaufzeichnungsvorrichtung - autark durch dieses Messsystemteil überwacht werden und die übrigen Messsystemteile über eine zum Zwecke der Überwachung der Messsystemstabilität aufgebauten Kommunikationsverbindung und/oder über eine zum Zweck der Messung bereits bestehende Nutzdatenverbindung über den auf diese Weise ermittelten Status eines Messsystemteils informiert werden.
Damit kann in der Praxis auch bei einer rückschauenden Betrachtungsweise hinreichend genau unterschieden werden, ob beispielsweise ein Verbindungsabbruch durch eine temporäre oder länger andauernde Instabilität des verwendeten Endgerätes der Gegenstelle - dies gilt insbesondere wenn das Endgerät funktionaler Bestandteil des Messsystem ist - verursacht wurde und in Folge alle weiteren Messergebnisse für eine bestimmte Zeit wertlos wären, oder ob es sich tatsächlich um ein originäres Qualitätsmerkmal des Mobilfunknetzes handelt. Im ersteren Fall erkennt die betroffene Seite die Instabilität selbständig und behebt diese z.B. durch einen Reset, während die nicht ursächlich betroffene Seite die Messung aussetzt, diese Ereignisse mit den Messdaten abspeichert und auf eine positive Statusmeldung der betroffenen Seite wartet.

Ergänzend hierzu ist es vorteilhaft, wenn seitens der Messsystemteile Statusinformationen der übrigen Messsystemteile in definierbaren Zeitintervallen erwartet werden, deren Ausbleiben als negative Statusmeldung des zugehörigen Messsystemteils bewertet und diese Statusinformation bezüglich der übrigen Messsystemteile in Kombination mit dem eigenen Systemstatus an die Messsystem-Steuerung als Eingangsgrösse für den weiteren Ablauf der aktuellen und noch zur Durchführung anstehenden Messungen übertragen werden.

### Der Erfindungsgedanke wird in nachfolgender Figur verdeutlicht. Es zeigt:

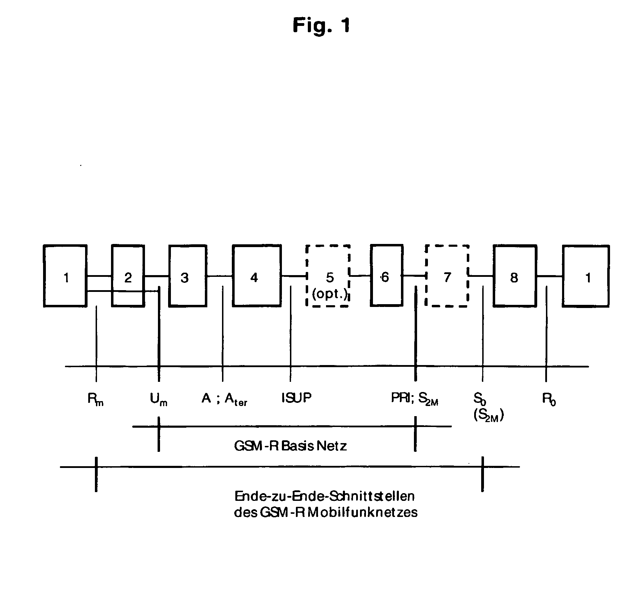

- **Figur 1**: Referenzkonfiguration und Schnittstellen eines auszumessenden GSM-R-Mobilfunknetzes

### Anhand dieser Figur 1 lässt sich folgendes Ausführungsbeispiel nachvollziehen:

Das anhand definierter Dienstgüteparameter zu bewertende Mobilfunk-Netzwerk nach dem GSM-R-Standard besteht aus Funksubsystemen mit Funkstationen und Funkstationssteuerungseinrichtungen, die entlang einer funkmässig zu versorgenden Eisenbahnstrecke angeordnet sind, zentralen stationären Mobilfunkvermittlungseinrichtungen sowie Netzübergängen und Netzabschlüssen als festnetzseitige Anbindungspunkte der stationären Teilnehmer (z.B. Fahrdienstleiter). Das für die Bewertung notwendige Messsystem teilt sich auf in einen mobilen Messsystemteil, der sich auf einem Schienenfahrzeug, wie zum Beispiel einem Messzug, befindet, sowie einem stationären Messsystemteil, z.B. in einer Eisenbahnbetriebzentrale.
Zwischen dem Lieferanten und dem Betreiber eines Mobilfunknetzes wurde vereinbart, dass der Dienstgüte-Parameter "Verbindungsaufbauzeit für Gruppenrufe" (Notifizierung und Bereitstellung der Sprachverbindung) nach erfolgtem vollständigen Netzaufbau in 95% der Fälle maximal 2 bzw. 5 Sekunden betragen darf. Zur Verifikation dieser vertraglichen Vereinbarung werden zum einen an der Schnittstelle Funk-/Luftschnittstelle (Um) mit Hilfe eines ASCI-fähigen Mobilfunkendgerät die Messwerte in Form von Signaliserungsinformationen auf dem von diesen Endgeräte benutzen Funkkanälen erfasst. Unter Aufprägung eines Orts- und Zeitbezuges werden die relevanten Signalisierungsnachrichten "CHANNEL REQUEST" und "CONNECT" (Herstellung der Sprachverbindung) herausgefiltert und aufgezeichnet. Da aufgrund der im GSM-R Netzwerk verwendeten Kanalkonfiguration für Gruppenrufe das rufaufbauende Mobile zuerst in einer Punkt-zu-Punkt-Verbindung an dem Gruppenruf teilnimmt und nicht die Bekanntmachung des Gruppenrufes (Notifizierung) im Broadcast bzw. gemeinsamen Gruppenrufkanal erfassen kann, wird die relevante Notifizierungs-Signalisierungsnachricht ("NOTI-FICATION") mit einem zweiten, als hörender Teilnehmer für diesen Gruppenruf konfigurierten, mobilen Endgerät erfasst und der Messapplikation zur Ergänzung mit Orts-und Zeitdaten übergeben. Abschließend wird der Gruppenruf durch den rufaufbauenden Teilnehmer wieder beendet. Die beteiligte stationäre Gegenseite geht nach Ruf-Ende automatisch in den Ausgangszustand zurück. Beide Seiten überprüfen den eigenen Messsystemstatus und tauschen diesen in bestimmten Zeitabständen (beispielsweise in Intervallen von 10 Minuten) über eine vom Master initiierte, separate Datenverbindung (bei einfacher Ausführung über separate, an das Messsystem angeschlossenen Endgeräte) aus. Fehlerhafte Statusmeldungen werden sofort der die Messung initiierenden Seite mitgeteilt. Dieses Szenario wird automatisch bis zum Erreichen eines einstellbaren (Teil-) Stichprobenumfangs wiederholt oder bei Bedarf vorher manuell beendet. Anschliessend werden die Ergebnisse an die Auswertung übergeben. Zur Eingrenzung möglicher Qualitätsdefizite des GSM-R Netzes werden die ebenfalls auf der stationären Seite aufgezeichneten Informationen mit den Mess-, Orts-, Zeit- und Ereignisdaten konsolidiert.

### Bezugszeichenliste:

- 1: Messapplikation mit Messsteuerungs-Software zum Senden und Empfangen von Signalisierungsinformationen und Nutzdaten sowie zum Erfassen und Aufzeichnen der gesendeten und empfangenen Signalisierungsinformationen und Nutzdaten
- 2: Mobilfunkendgerät bzw. Mobilfunk-Terminal-Adapter (MT2), insbesondere auch solche mit Fähigkeit zum Erfassen der Signalisierungsinformationen auf der Schnittstelle Um
- 3: Mobilfunk-Funksubsystem (BSS)
- 4: Mobilfunk-Vermittlungs(sub)system (NSS)
- 5: optionales Mobilfunk-Vermittlungs(sub)system
- 6: Netzwerk-Abschluss (NT 1)
- 7: optionale Nebenstellen(vermittlungs)anlage oder optionaler Netzwerk-Abschluss (NT2)
- 8: ISDN-Terminal-Adaptor (ISDN-TA)

## Patentansprüche

1. Verfahren zur Messung mindestens eines die Qualität eines zwischen mindestens einem ersten mobil betriebenen Endgerät und mindestens einem stationär betriebenen Endgerät und/oder weiteren mobil betriebenen Endgeräten aufgebauten Mobilfunknetzes bzw. Ende-zu-Ende-Mobilfunkdienstes charakterisierenden Dienstgüte-Parameters, wobei auf der Seite des mobil betriebenen Funknetzteiles mittels eines aus mindesten
• einem ersten Mobilfunkendgerät, mit der Eigenschaft zum Initiieren und Empfangen von Verbindungen sowie zum Generieren und Erfassen von über Funk übertragenen Signalisierungsinformationen für Sprach-, Daten- und/oder ASCI-Dienste,
• einem Orts- und Zeitgeber,
• einem Computer mit einer Messapplikation zur Steuerung und Überwachung der Messung sowie
• einer Datenspeicherungsvorrichtung aufgebauten Messsystemteils die an einer Funkschnittstelle (Um) übertragenen Signalisierungsinformationen und/oder die an einer mobilen Endschnittstelle (Rₘ) des Mobilfunknetzes übertragenen Signalisierungsinformationen und/oder Nutzdaten sowie auf der Seite des stationär betriebenen Funknetzteiles mittels eines aus mindestens
• einem ISDN-Endgerät mit der Eigenschaft zum Initiieren und Empfangen von Verbindungen für Sprach-, Daten- und/oder ASCI-Dienste,
• einem Orts- und Zeitgeber,
• einem Computer mit einer Messapplikation zur Steuerung und Überwachung der Messung sowie
• einer Datenspeicherungsvorrichtung aufgebauten Messsystemteils die an einem festnetzseitigem Abschluss des Mobilfunknetzes, insbesondere der Schnittstelle S₀ oder S_{2M}, übertragenen Signalisierungsinformationen und / oder Nutzdaten erfasst und abgespeichert werden, wobei die stationären und mobilen Messsystemteile in einer definierten Master-/Slave-Beziehung zueinander stehen und das den Verbindungsaufbau initiierende Messsystemteil jeweils die Master-Funktion wahrnimmt
**dadurch gekennzeichnet,**
**dass** mindestens ein weiteres mobiles Endgerät in den mobilen Messsystemteil integriert sowie als passiver Teilnehmer an einer Gruppen- oder Sammelrufverbindung zur Erfassung der zum Aufbau dieser Gruppen- oder Sammelrufverbindung notwendigen Signalisierungsinformationen eingesetzt wird, wobei die Verbindungsaufbauinformationen in diesem Messsystemteil mindestens von diesem weiteren mobilen Endgerät und dem ersten mobil betriebenen Mobilfunkendgerät korreliert, zusammengeführt und aufgezeichnet werden.

2. Verfahren nach Anspruch 1, **dadurch gekennzeichnet, dass**
• in einer Phase für den qualitativ zu bewertenden Aufbau einer Verbindung sowohl den zum Zweck der Messung gesendeten Signalisierungsinformationen auf der Senderseite als auch den zum Zweck der Messung empfangenen Signalisierungsinformationen auf der Empfängerseite und
• zusätzlich in einer Phase für die qualitativ zu bewertende Übertragung von Nutzdaten sowohl den zum Zweck der Messung gesendeten Nutzdaten auf der Senderseite als auch den zum Zweck der Messung empfangenen Nutzdaten auf der Empfängerseite
durch die mobilen bzw. stationären Messsystemteile jeweils nach erfolgter messtechnischer Erfassung
• den Ort des Senders bzw. Empfängers charakterisierende Informationsdaten,
• den Zeitpunkt des Sende- bzw. Empfangsvorgangs charakterisierende Informationsdaten
• sowie die Synchronizität der Steuerabläufe des Messsystems und / oder die Kohärenz von einander zugehörigen gesendeten und empfangenen Nutzdatenströmen charakterisierende Informationsdaten aufgeprägt werden.

## Claims

1. A method for the measurement of at least one service quality parameter characterizing the quality of a mobile radio network or end-to-end mobile radio service established between at least one first mobile operation terminal device and at least one stationary operation terminal device and/or additional mobile operation terminal devices, wherein on the side of the mobile operation radio network part by means of a measurement system part established of at least
- one first mobile radio terminal device with the characteristic for initiating and receiving of connections as well as for generating and capturing signalling information for speech, data and/or ASCI services transmitted via radio,
- a location and time generator,
- a computer with a measurement application for the control and monitoring of the measurement as well as
- a data storage device the signalling information transmitted at a radio interface (Uₘ) and/or the signalling information transmitted at a mobile end interface (Rₘ) of the mobile radio network and/or useful data as well as on the side of the stationary operation radio network part by means of a measurement system part established of at least
- one ISDN terminal device with the characteristic for initiating and receiving of connections for speech, data and/or ASCI services,
- a location and time generator,
- a computer with a measurement application for the control and monitoring of the measurement as well as
- a data storage device which on a fixed network sided termination of the mobile radio network, more preferably captures and stores signalling information transmitted more preferably to the interface So or S_{2M} wherein the stationary and mobile measurement system parts are in a defined master/slave relationship and the measurement system part initiating the connection establishment in each case assumes the master function, **characterized in that** the at least one additional mobile terminal device is integrated in the mobile measurement system part as well as employed as passive subscriber in a group or collective call connection for capturing the signalling information necessary for establishing this group or collective call connection, wherein the connection establishment information in this measurement system part is at least correlated, combined and recorded by this additional mobile terminal device and the first mobile operation mobile radio terminal device.

2. The method according to Claim 1, **characterized in that**
- in a phase for the establishment of a connection to be evaluated in terms of quality and the signalling information on the sender side sent for the purpose of measurement as well as the signalling information on the receiver side received for the purpose of measurement and
- additionally in a phase for the transmission of useful data to be evaluated in terms of quality both the useful data sent for the purpose of measurement on the sender side as well as the useful data received for the purpose of measurement on the receiver side through the mobile or stationary measurement system after each completed technical measurement capture are imprinted with
- the information data characterizing the location of the sender or receiver,
- the information data characterizing the time of the sending or receiving operation and the synchronicity of the control sequences of the measurement system and/or the coherence of information data characterizing sent and received useful data flows which belong together.

## Revendications

1. Procédé de mesure d'au moins un paramètre de qualité de service caractérisant la qualité d'un service de radio mobile ou d'un service de radio mobile de terminal à terminal établi entre au moins un premier appareil terminal à fonctionnement mobile et au moins un appareil terminal à fonctionnement stationnaire et/ou d'autres appareils terminaux à fonctionnement mobile,
dans lequel, au niveau du bloc d'alimentation radio mobile à fonctionnement mobile, au moyen d'un élément de système de mesure constitué d'au moins
• un premier appareil terminal de radio mobile ayant la propriété d'initier et de recevoir des liaisons et de générer et détecter des informations de signalisation transmises par radio pour des services vocaux, de données et/ou ASCI
• un temporisateur et localisateur,
• un ordinateur doté d'une application de mesure pour la commande et la surveillance de la mesure et
• un dispositif de sauvegarde de données et
• un dispositif de sauvegarde de données,
les informations de signalisation transmises à une interface radio (Uₘ) et/ou les informations de signalisation et/ou données utiles transmises à une interface terminale mobile (Rₘ) du réseau de radio mobile
et, au niveau du bloc d'alimentation radio à fonctionnement stationnaire, au moyen d'un élément de système de mesure constitué d'au moins
• un appareil terminal ISDN ayant la propriété d'initier et de recevoir des liaisons pour des services vocaux, de données et/ou ASCI,
• un localisateur et temporisateur,
• un ordinateur doté d'une application de mesure pour la commande et la surveillance de la mesure et
• un dispositif de sauvegarde de données,
les informations de signalisation et/ou données utiles transmises à une terminaison située au niveau du réseau fixe du réseau de radio mobile, notamment de l'interface S₀ ou S_{2M}, sont détectées et sauvegardées, les éléments de système de mesure stationnaires et mobiles sont les uns avec les autres dans une relation maître/esclave définie et l'élément de système de mesure initiant l'établissement de la liaison assure respectivement la fonction de maître,
**caractérisé en ce que**
au moins un autre appareil terminal mobile est intégré dans l'élément de système de mesure mobile et est utilisé comme participant passif à une liaison d'appel groupé ou multidestinataire pour la détection des informations de signalisation nécessaires pour l'établissement de cette liaison d'appel groupé ou multidestinataire, les informations d'établissement de la liaison étant mises en corrélation, regroupées et enregistrées dans cet élément de système de mesure au moins par cet autre appareil terminal mobile et le premier appareil terminal mobile à fonctionnement mobile.

2. Procédé selon la revendication 1, **caractérisé en ce que**
• dans une phase d'établissement à évaluer qualitativement d'une liaison, aussi bien dans les informations de signalisation envoyées aux fins de la mesure du côté émetteur que dans les informations de signalisation reçues aux fins de la mesure du côté destinataire et
• en supplément, dans une phase de transmission de données utiles à évaluer quantitativement, aussi bien dans les données utiles envoyées aux fins de la mesure du côté émetteur que dans les données utiles reçues aux fins de la mesure du côté destinataire,
• les données d'information caractérisant la localisation de l'émetteur ou du destinataire,
• les données d'information caractérisant le moment de l'opération d'envoi ou de réception
• ainsi que les données d'information caractérisant la synchronicité des processus de commande du système de mesure et/ou la cohérence des flux imbriqués de données utiles envoyés et reçus,
sont gravées par les éléments de système de mesure mobiles ou stationnaires respectivement une fois que la détection par technique de mesure a été faite.
